# EUROPÄISCHE PATENTSCHRIFT

(11) **EP 2 010 801 B1**
(45) Veröffentlichungstag und Bekanntmachung des Hinweises auf die Patenterteilung: **24.06.2009**
(21) Anmeldenummer: 07722234.7
(22) Anmeldetag: 17.04.2007
(51) Int. Cl.: F16G 13/16

(54) **ENERGIEFÜHRUNGSKETTE**
ENERGY CONDUCTION CHAIN
CHAINE D'ACHEMINEMENT D'ENERGIE

(30) Priorität: 21.04.2006 DE 202006006640 U
(43) Veröffentlichungstag der Anmeldung: 07.01.2009
(73) Patentinhaber: igus GmbH, 51147 Köln (DE)
(72) Erfinder: BLASE, Günter, 51429 Bergisch Gladbach (DE)
(74) Vertreter: Lippert, Stachow & Partner
(86) Internationale Anmeldenummer: PCT/DE2007/000676
(87) Internationale Veröffentlichungsnummer: WO 2007/121714

(56) Entgegenhaltungen:
- WO-A-99/57457
- DE-U1-5202006 006 64
- DE-U1-5202006 006 66
- US-A- 6 156 974

## Beschreibung

Die Erfindung betrifft eine Energieführungskette nach dem Oberbegriff des Hauptanspruchs.

Eine solche Energieführungskette ist beispielsweise aus der internationalen Anmeldung WO 99/57457 bekannt. Die hier offenbarte Energieführungskette weist an ihren Seitenlaschen Laufrollen, auf, deren Laufflächen mehrere beabstandete umlaufende Führungsrillen mit bevorzugt trapezförmigem Querschnitt aufweisen. In die Führungsrillen können die Kämme neben den Rillen der Laufrollen des gegenüberliegenden Trums eingreifen, wodurch eine Führung in Längsrichtung bei gleichzeitigem Versatz des Obertrums gegen das Untertrum in Querrichtung erfolgt.

Bei dieser Ausführungsform rollen die Laufrollen nicht nur ab, sondern die Flanken der ineinander greifenden Kämme gleiten auch aufeinander. Dies verursacht eine erhöhte Reibung, insbesondere wegen der Gewichtskraft des Obertrums, welche dessen Führungsrollen mit ihren Kämmen in die Führungsrillen der Laufrollen des Untertrums preßt. Durch diese Gleitreibung wird das Verfahren der Energieführungskette in Längsrichtung erschwert. Außerdem wird das Obertrum leicht angehoben, wenn sich Laufrollen begegnen. Sind bei längeren Ketten die rollentragenden Kettenglieder gleichmäßig verteilt, beispielsweise bei einer 50 m langen Rolle ein solchen Kettenglied je m, dann kann das gleichzeitigen Anheben des Obertrums beträchtliche Kräfte erfordern, die einen kräftigen Antrieb erfordern, eine unstetige Bewegung zur Folge haben und zum unerwünschten Seitenversatz der Oberrums führen können.

Die Erfindung stellt sich die Aufgabe, eine Energieführungskette mit Laufrollen, die auf den Laufflächen mit Führungsrillen versehen sind, so auszugestalten, dass das Verfahren in Längsrichtung erleichtert wird.

Diese Aufgabe wird durch eine Energieführungskette nach Anspruch 1 gelöst.

Durch die Abdeckung der Führungsrillen mittels der zwischen den Längsschlitzen für den Durchtritt der Laufrollenkämme sich befindenden Stege können die Kämme eines Trums nicht mehr bis zur Berührung mit-den Flanken der Kämme des anderen Trums in die Führungsrillen eindringen. Sie rollen statt dessen auf den Stegen ab. Dabei bleibt die Führungswirkung erhalten, denn bei einer ggf. auftretenden versetzenden Seitenkraft können sich die Kämme der Laufrollen der sich gegenüberliegenden Trums berühren und den Versatz begrenzen. Die Gewichtskraft des Obertrums wird von den Stegen aufgenommen und kann die Reibung nicht mehr erhöhen.

Die Anzahl der Führungsrillen kann eins oder mehrere sein, je nach der Größe der Kettenglieder und den aufzunehmenden Kräften. Bevorzugt sind Laufrollen mit eins bis drei Führungsrillen.

Die Laufrollen können einstückig ausgebildet sein, wobei die Führungsrillen bei der Formung ausgebildet oder nachträglich ausgearbeitet sein können. Bei einer bevorzugten Ausführungsform werden mehrere, beispielsweise scheibenförmige Rollen axial nebeneinander angeordnet, die auf einander liegen oder auch beabstandet sein können. Diese Rollen können unabhängig voneinander gelagert sein, beispielsweise mit Kugellagern.

In einer bevorzugten Ausführungsform sind die Laufrollen mit jeweils einer Führungsrille versehen, wodurch jeweils zwei Kämme gebildet werden und zwei Längsschlitze in der Lauffläche vorhanden sind.

In einer anderen bevorzugten Ausführungsform sind mehrere, bevorzugt zwei oder drei Führungsrillen, die von jeweils um eins größeren Anzahl von Kämmen begrenzt werden, und die entsprechende Zahl von Längsschlitzen vorgesehen.

In einer weiteren bevorzugten Ausführungsform sind zwei oder mehrere Laufrollen vorhanden, deren Drehachsen zusammenfallen und die sich berührend aufeinander liegen oder voneinander beabstandet sind. Die Rollen können eine sich radial nach außen vermindernde Dicke haben, so dass sie sich nur im Bereich der Achse berühren und im Umfangsbereich die Führungsrillen bilden. Sind die Rollen auch nahe der Achse beabstandet, dann wird auch dann eine Führungsrille gebildet, wenn sie zylindrisch sind.

Besonders bevorzugt ist eine Ausführungsform mit zwei Rollen und einer durch diese gebildeten Führungsrille.

In einer weiteren bevorzugten Ausführungsform sind in den Laufflächen Längsfurchen vorgesehen, die sich in Längsrichtung der Energieführungskette in Fortsetzung der Längsschlitze erstrecken. Hierdurch wird eine zusätzliche Führungswirkung erzielt, ohne dass wesentliche Reibungsverluste auftreten.

Bei einer weiteren Ausführungsform wird die Führungswirkung durch Führungselemente an den Querstegen der Kettenglieder weiter unterstützt. Dies können vorteilhaft ineinandergreifende sägeartige Strukturen an den Außenseiten sich in Unter- bzw. Obertrum gegenüberliegender Querstege sein, deren Zähne in Längsrichtung der Energieführungskette zugespitzt sein können, damit sie beim Verfahren ohne Blockieren in die entsprechenden Zwischenräume einlaufen können.

Weitere Vorteile der erfindungsgemäßen Energieführungskette mit der Abdeckung der Führungsrillen ist die Verminderung der Geräuschentwicklung beim Verfahren der Kette und eine sichere Führung des Obertrums ohne Gefahr unbeabsichtigten seitlichen Ausbrechens.

Zur weiteren Veranschaulichung der Erfindung dienen die nachfolgend angeführten Ausführungsbeispiele, die mit Bezug auf die Zeichnungen beschrieben werden.
Figur 1 zeigt einen schematischen Teilquerschnitt durch einen Laschenabschnitt einer erfindungsgemäßen Energieführungskette.
Figur 2 zeigt einen Querschnitt eines Laschenabschnitts einer anderen erfindungsgemäßen Ausführungsform.
Figur 3 zeigt einen Querschnitt der Ausführungsform nach Figur 2 in einem anderen Betriebszustand.
Figur 4 zeigt eine Seitenansicht eines Laschenabschnitts einer dritten Ausführungsform.
Figur 5 zeigt einen Querschnitt einer vierten Ausführungsform.

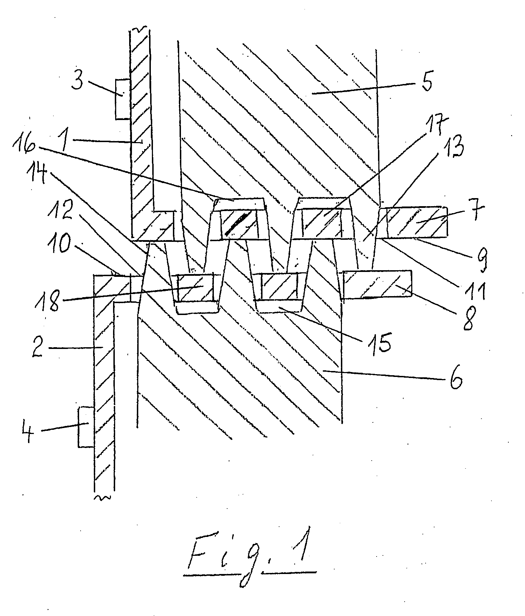

Figur 1 zeigt einen Teilschnitt der sich gegenüberliegenden Teile der Seitenlaschen 1 des Obertrums und 2 des Untertrums einer Energieführungskette. Die Zapfen 3 und 4 sind zum Befestigen von nicht gezeigten Querstegen vorgesehen, die zum Inneren der aus Seitenlaschen und Querstegen gebildeten Kettenglieder weisen, und an deren entfernten Enden wiederum (nicht sichtbare) Seitenlaschen angebracht sind. An den von den Zapfen 3, 4 abgewandten Seiten der Seitenlaschen sind Laufrollen 5, 6 angebracht, die in bekannter Weise um (nicht gezeigte) horizontale Achsen drehbar sind. Die Rollen weisen an ihren Umfangsflächen Führungsrillen 15, 16 auf, welche von den Kämmen 13, 14 flankiert werden. Die Seitenlaschen weisen ferner an den sich gegenüberliegenden Rändern Verbreiterungen 7, 8 auf. Die sich gegenüberliegenden Flächen der Verbreiterungen dienen als Laufflächen 9, 10 für das Abrollen der Laufrollen 5, 6. In diesen Verbreiterungen sind Längsschlitze 11, 12 angebracht, welche die Kämme der Laufrollen durchtreten lassen und in Längsrichtung verlaufende Stege 17, 18 begrenzen. Wenn das Obertrum so nah wie möglich auf dem Untertrum liegt, ruhen die Kämme 13, 14 der Führungsrollen auf den Stegen 17, 18 und berühren sich nicht. Beim Verfahren der Energieführungskette rollen die Kämme der Laufrollen auf den Stegen bzw. auf den Laufflächen ab, ohne dass eine Gleitreibung zwischen ihnen auftritt.

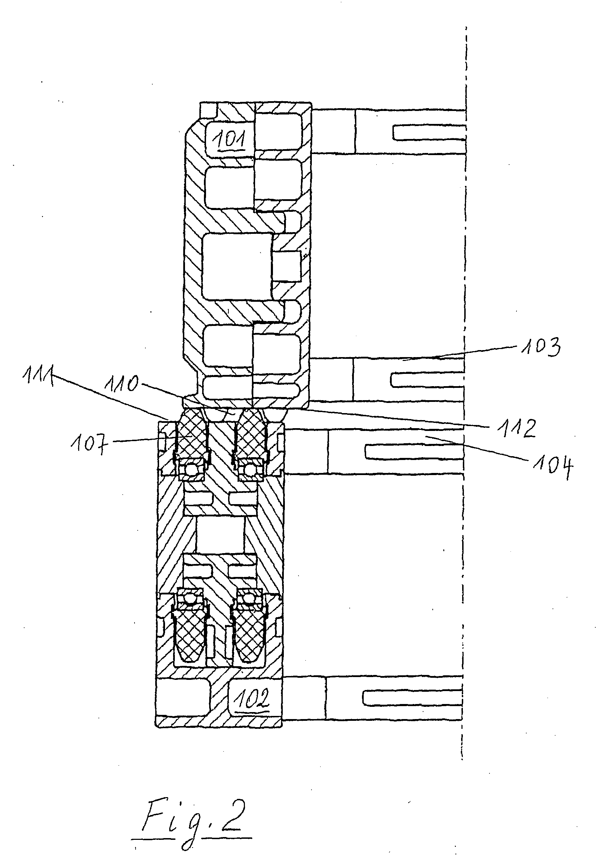

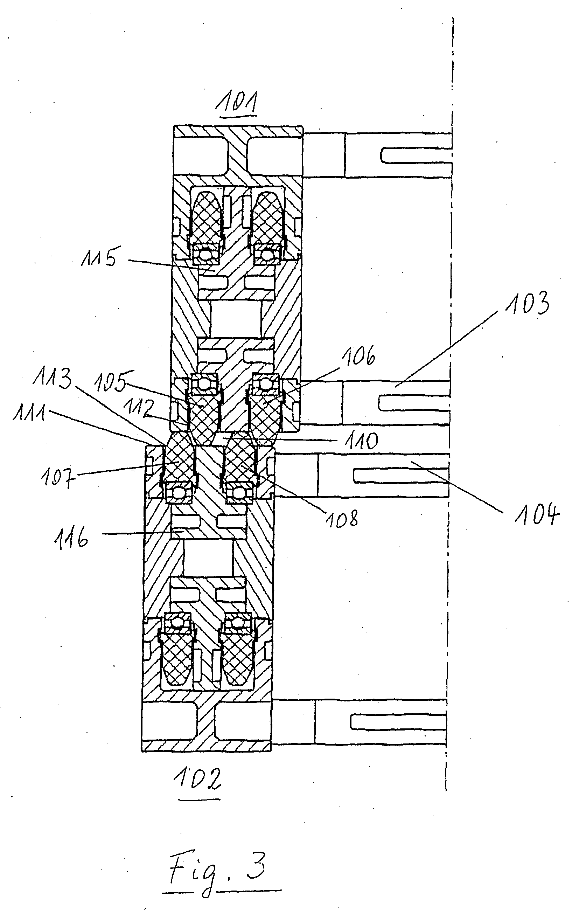

Figuren 2 und 3 zeigen Querschnitte durch ein Paar zum Ober- bzw. Untertrum gehörender Seitenlaschen 101, 102. Die Zapfen 103, 104 dienen wiederum zum Befestigen von Querstegen. In jeder Seitenlasche sind auf Rollenträgern 115, 116 je zwei Laufrollen in einem Abstand mit gemeinsamer Achsenrichtung auf Kugellagern angebracht. Die einander zugewandten Seitenflächen der Seitenlaschen 101, 102 bilden die Laufflächen 111 für die Laufrollen. In den Laufflächen befinden sich Längsschlitze 112, 113, welche die radial äußeren Abschnitte der Laufrollen nach außen treten lassen. Diese äußeren Abschnitte der beiden Rollen einer jeden Seitenlasche begrenzen als Kämme des Laufrollensystems eine Führungsrille 110. Figur 2 zeigt diese Ausführungsform in einem Zustand, bei dem die Laufrollen voneinander entfernt sind und jeweils auf den Laufflächen 111 abrollen. Dagegen stehen sich in dem in Figur 3 gezeigten Zustand die Laufrollen.gegenüber und rollen auf den Stegen zwischen den Schlitzen 112, 113 ab. Man sieht, dass auch hier die Laufrollen sich beim Verfahren nicht berühren und daher keine Gleitreibung zwischen ihnen auftritt.

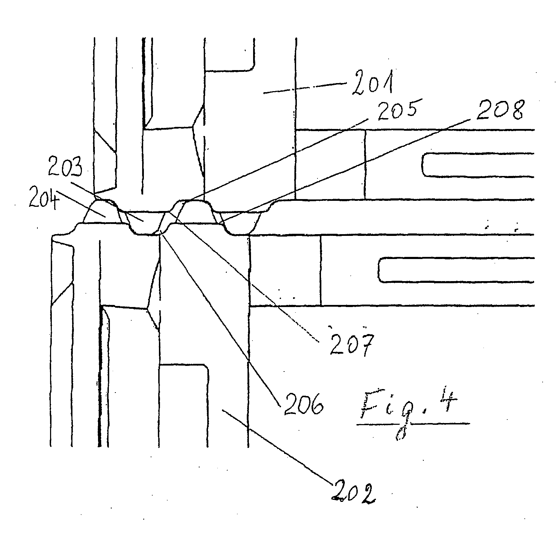

Figur 4 zeigt eine weitere erfindungsgemäße Ausführungsform in Seitenansicht. Hierbei sind in den Seitenflächen 207, 208 der Seitenlaschen 2.01, 202 Längsfurchen 205, 206 ausgebildet, in denen die Laufrollen 203, 204 abrollen. Die Längsfurchen erstrecken sich in Richtung und im Anschluß der hier nicht dargestellten Längsschlitze für den Durchtritt der Laufrollen. Diese zusätzliche Führung der Laufrollen in den Längsfurchen erfolgt ebenfalls fast ausschließlich ohne Gleitreibung.

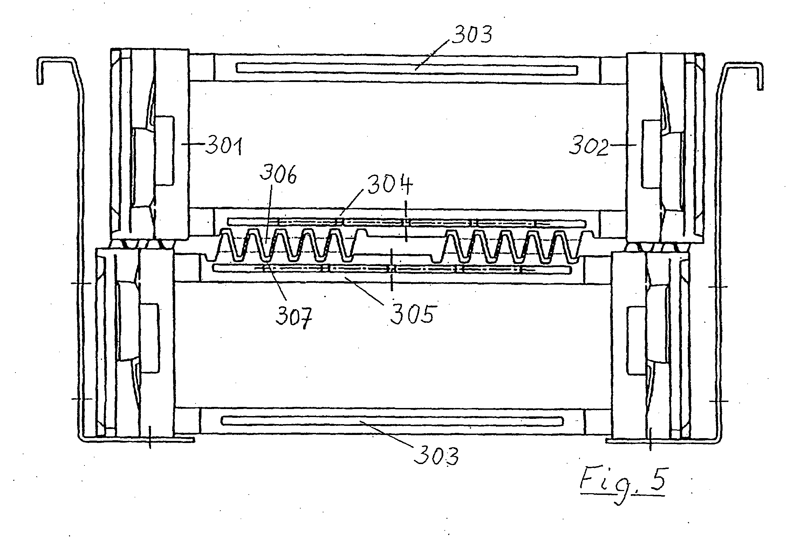

Figur 5 zeigt eine vierte erfindungsgemäße Ausführungsform der Energieführungskette in Frontansicht auf zwei Kettenglieder in Unter- und Obertrum. Die Kettenglieder bestehen aus Seitenlaschen 301, 301 und Querstegen 303, 304, 305. Die einander zugewandten Querstege 304, 305 weisen an ihrer Außenseite eine sägeartige Struktur auf. Beim Passieren werden die Zähne 306 der Struktur durch die Nuten 307 geführt, wodurch ein seitlicher Versatz des Obertrums vermieden wird.

### Bezugzeichenliste

- 1, 2: Seitenlasche
- 3, 4: Zapfen für Quersteg
- 5, 6: Laufrolle
- 7, 8: randseitige Verbreiterung
- 9, 10: Lauffläche
- 11, 12: Längsschlitz
- 13, 14: Kämme der Laufrollen
- 15, 16: Führungsrillen der Laufrollen
- 17, 18: Längssteg
- 101, 102: Seitenlasche
- 103, 104: Zapfen für Quersteg
- 105, 106: Laufrolle
- 107, 108: Laufrolle
- 110: Führungsrille
- 111: Lauffläche
- 113, 114: Längsschlitz
- 115, 116: Rollenträger
- 201, 202: Seitenlasche
- 203, 204: Laufrolle
- 205, 206: Längsfurche
- 207, 208: Seitenfläche der Seitenlasche
- 301, 302: Seitenlasche
- 303: Quersteg
- 304, 305: Quersteg mit Sägestruktur
- 306: Zahn
- 307: Nut

## Patentansprüche

1. Energieführungskette zur Führung von Schläuchen, Kabeln oder dergleichen mit einer Anzahl gelenkig miteinander verbundener Kettenglieder, die durch zueinander parallele Seitenlaschen (1, 2) und diese verbindende Querstege gebildet werden, wobei die Energieführungskette so verfahrbar ist, dass diese ein Obertrum, ein Untertrum und einen diese verbindenden Umlenkbereich bildet, wobei das Obertrum auf dem Untertrum aufliegt und zumindest an einigen Kettengliedern des Obertrums und/oder des Untertrums Laufrollen (5, 6, 105, 106, 107, 108, 203, 204) vorgesehen sind, die derart angeordnet sind, dass sie auf an den Kettengliedern des gegenüberliegenden Trums vorgesehenen Laufflächen (9, 10, 111) bei einer Bewegung der Energieführungskette abrollbar sind, und die in ihrer Lauffläche eine Anzahl beabstandeter umlaufender Führungsrillen (15, 16, 110) aufweisen, in welche die Kämme (13, 14) der Laufrollen des gegenüberliegenden Trums eingreifen können, **dadurch gekennzeichnet, dass** die Laufflächen beabstandete Längsschlitze aufweisen, welche die Kämme des Laufflächenprofils durchtreten lassen, wobei die Stege (17, 18) zwischen den Längsschlitzen die Führungsrillen auf der dem anderen Trum zugewandten Seite abdeckten, so dass die Kämme der Laufrollen des anderen Trums auf den Stegen abrollen können.

2. Energieführungskette nach Anspruch 1, **dadurch gekennzeichnet, dass** eine Führungsrille vorhanden ist.

3. Energieführungskette nach Anspruch 1, **dadurch gekennzeichnet, dass** mehrere Führungsrillen vorhanden sind.

4. Energieführungskette nach Anspruch 1, 2 oder 3, **dadurch gekennzeichnet, dass** die Führungsrillen durch zwei oder mehrere axial aufeinander liegende oder beabstandete Rollen (105, 106, 107, 108, 203, 204) gebildet werden

5. Energieführungskette nach Anspruch 4, **dadurch gekennzeichnet, dass** zwei Laufrollen eine Führungsrille bilden.

6. Energieführungskette nach einem der vorangehenden Ansprüche, **dadurch gekennzeichnet, dass** in den Laufflächen in Fortsetzung der Längsschlitze Führungsfurchen (205, 206) in Längsrichtung der Energieführungskette vorgesehen sind, in denen die Kämme der Laufrollen laufen können.

7. Energieführungskette nach einem der vorangehenden Ansprüche, **dadurch gekennzeichnet, dass** an den Querstegen (304, 305) der Kettenglieder Führungselemente (306, 307) vorhanden sind.

8. Energieführungskette nach Anspruch 7, **dadurch gekennzeichnet, dass** als Führungselemente an den Außenseiten sich gegenüberliegender Querstege sägeartige Strukturen vorhanden sind, die beim Verfahren ineinandergreifen können.

## Claims

1. Energy guiding chain for guiding hoses, cables and the like, with a number of chain links connected to each other in articulated fashion, which are formed by mutually parallel side straps (1, 2) and cross-members connecting them, where the energy guiding chain can be traversed in such a way that it forms an upper strand, a lower strand, and a deflection zone connecting them, where the upper strand rests on the lower strand, and rollers (5, 6, 105, 106, 107, 108, 203, 204) are provided on at least some chain links of the upper strand and/or the lower strand, being arranged in such a way that, when the energy chain moves, they can roll on running surfaces (9, 10, 111) provided on the chain links of the opposite strand, and displaying a number of spaced, peripheral guide grooves (15, 16, 110) in their running surface, which can be engaged by the crests (13, 14) of the rollers of the opposite strand, **characterized in that** the running surfaces display spaced longitudinal slits that allow the crests of the roller profile to pass through, where the webs (17, 18) between the longitudinal slits cover the guide grooves on the side facing the other strand, such that the crests of the rollers of the other strand can roll on the webs.

2. Energy guiding chain according to Claim 1, **characterized in that** a guide groove is present.

3. Energy guiding chain according to Claim 1, **characterized in that** several guide grooves are present.

4. Energy guiding chain according to Claim 1, 2 or 3, **characterized in that** the guide grooves are formed by two or more rollers (105, 106, 107, 108, 203, 204), lying axially against each other or spaced apart.

5. Energy guiding chain according to Claim 4, **characterized in that** two rollers form a guide groove.

6. Energy guiding chain according to one of the preceding Claims, **characterized in that** guide channels (205, 206) are provided in the running surfaces in continuation of the longitudinal slits in the longitudinal direction of the energy guiding chain, in which the crests of the rollers can run.

7. Energy guiding chain according to one of the preceding Claims, **characterized in that** guide elements (306, 307) are present on the cross-members (304, 305) of the chain links.

8. Energy guiding chain according to Claim 7, **characterized in that** saw-like structures are present on the outer sides of opposite cross-members, as guide elements that can engage each other during traversing.

## Revendications

1. Chaîne ou goulotte d'acheminement d'énergie, pour le guidage de conduites, câbles ou éléments similaires, comprenant un certain nombre de maillons de chaîne reliés mutuellement de manière articulée, qui sont formés par des joues latérales de chaîne (1, 2) parallèles les unes aux autres et des traverses les reliant, la chaîne d'acheminement d'énergie pouvant être déplacée de manière à ce qu'elle forme un brin supérieur, un brin inférieur et une zone de renvoi reliant ces brins, le brin supérieur reposant sur le brin inférieur, et des galets de roulement (5, 6, 105, 106, 107, 108, 203, 204) étant prévus sur au moins quelques maillons de chaîne du brin supérieur et/ou du brin inférieur en étant agencés de manière à pouvoir rouler, lors d'un mouvement de déplacement de la chaine d'acheminement d'énergie, sur des surfaces de circulation (9, 10, 111) prévues sur les maillons de chaine du brin opposé, et ces galets comportant dans leur surface de roulement un certain nombre de gorges de guidage périphériques (15, 16, 110) espacées les unes des autres et dans lesquelles peuvent s'engager les dents intermédiaires (13, 14) des galets de roulement du brin opposé, **caractérisée en ce que** les surfaces de circulation présentent des fentes longitudinales espacées les unes des autres, qui laissent passer les dents du profil de surface de roulement, les nervures intermédiaires (17, 18) entre les fentes longitudinales recouvrant les gorges de guidage sur le côté dirigé vers l'autre brin, de sorte que les dents des galets de roulement de l'autre brin peuvent rouler sur les nervures intermédiaires.

2. Chaîne d'acheminement d'énergie selon la revendication 1, **caractérisée en ce qu'**il est prévu une gorge de guidage.

3. Chaîne d'acheminement d'énergie selon la revendication 1, **caractérisée en ce que** sont prévues plusieurs gorges de guidage.

4. Chaîne d'acheminement d'énergie selon la revendication 1, 2 ou 3, **caractérisée en ce que** les gorges de guidage sont formées par deux galets (105, 106, 107, 108, 203, 204) ou davantage appliqués axialement les uns contre les autres ou espacés axialement les uns des autres.

5. Chaîne d'acheminement d'énergie selon la revendication 4, **caractérisée en ce que** deux galets de roulement forment une gorge de guidage.

6. Chaîne d'acheminement d'énergie selon l'une des revendications précédentes, **caractérisée en ce que** dans les surfaces de circulation sont prévues, en prolongement des fentes longitudinales, des sillons de guidage (205, 206) dans la direction longitudinale de la chaîne d'acheminement d'énergie, dans lesquels peuvent circuler les dents des galets de roulement.

7. Chaîne d'acheminement d'énergie selon l'une des revendications précédentes, **caractérisée en ce que** des éléments de guidage (306, 307) sont prévus sur les traverses (304, 305) des maillons de chaîne.

8. Chaîne d'acheminement d'énergie selon la revendication 7, **caractérisée en ce qu'**en guise d'éléments de guidage sont prévus, sur les côtés extérieurs de traverses mutuellement en regard, des structures en forme de dents de scie, qui peuvent venir en prise réciproque lors du déplacement.
